## Europäisches Patentamt
## European Patent Office
## Office européen des brevets

(19)

(11) Veröffentlichungsnummer: **0 056 665**
**B1**

(12)

# EUROPÄISCHE PATENTSCHRIFT

(45) Veröffentlichungstag der Patentschrift:
**04.09.85**

(51) Int. Cl.⁴: **B 65 D 21/02, A 01 G 9/10**

(21) Anmeldenummer: **82200011.3**

(22) Anmeldetag: **07.01.82**

(54) **Stapelbarer Behälter für Pflanzgut.**

(30) Priorität: **10.01.81 NL 8100096**

(43) Veröffentlichungstag der Anmeldung:
**28.07.82 Patentblatt 82/30**

(45) Bekanntmachung des Hinweises auf die Patenterteilung:
**04.09.85 Patentblatt 85/36**

(84) Benannte Vertragsstaaten:
**AT BE CH DE FR GB IT LI LU NL SE**

(56) Entgegenhaltungen:
**AU - B - 480 373**
**FR - A - 2 409 692**
**GB - A - 666 355**
**GB - A - 998 401**
**GB - A - 1 253 561**
**NL - A - 7 606 555**
**US - A - 3 172 542**
**US - A - 3 204 778**
**US - A - 3 405 810**
**US - A - 3 443 722**
**US - A - 3 648 909**

(73) Patentinhaber: **CURVER B.V., Spoorlaan Noord 92, NL-5121 WX Rijen (NL)**

(72) Erfinder: **Leenders, Jan, Hoofdstraat 120, NL-5121 JH Rijen (NL)**

(74) Vertreter: **Hoogstraten, Willem Cornelis Roeland et al, OCTROOIBUREAU DSM Postbus 9, NL-6160 MA Geleen (NL)**

## Beschreibung

Die Erfindung betrifft einen stapelbaren Behälter der aus einem im wesentlichen rechteckigen Boden mit hierauf angebrachten senkrechten Begrenzungswänden, sowie vier nahe den Eckpunkten angeordneten Abstandhaltern besteht, die als Erst- bzw. Zweitabstandhalter für gerades Übereinanderstapeln von mehreren identischen Behältern in einer ersten bzw. zweiten Gebrauchsstellung mit geringem bzw. grossem Stapelabstand dienen.

Ein Behälter der erwähnten Gattung ist aus GB-A-998 401 bekannt. Bei diesem Behälter muss man beim Stapeln in der zweiten Gebrauchsstellung und bei Wechsel der Gebrauchsstellung immer einen Behälter um 180° drehen. Dies bedeutet dann einen Nachteil wenn die Behälter z.B. für das Züchten von Pflanzen aus Samen oder Stecklingen verwendet werden sollen, da dabei das Stapeln in der zweiten Gebrauchsstellung und das Wechseln der Gebrauchsstellung häufig vorkommen. Die Behälter spielen nämlich während des gesamten Pflanzzyklus eine Rolle, der sich von der Füllstation zum Füllen der Behälter mit dem Pflanzmedium bis zum Auspflanzen der ausgewachsenen Pflanzen oder Stecklinge in Töpfen oder im freien Feld sowie Rücktransport der leeren Behälter zur Füllstation erstreckt.

Um einen guten Einblick in die Erfindung zu vermitteln, wird im folgenden eine kurze Beschreibung des Pflanzzyklus gegeben. Die in Stapelform herantransportierten leeren Behälter werden in einer Füllstation mit Pflanzmedium gefüllt. Das Pflanzmedium liegt durchwegs in Form von in quadratische Blöcke zerbrechbaren Platten aus gepresster Pflanzerde vor. Die Platten werden in die vom Stapel abgenommenen Behälter gelegt. Handelt es sich um Behälter, die auf einer Seite mit keiner Begrenzungswand versehen sind, so lassen sich die Platten in die Behälter schieben, ohne dass diese vom Stapel abgenommen werden müssen. Nach dem Füllen mit Pflanzmedium werden die gestapelten Behälter, evtl. über eine Zwischenlagerung, an eine Stelle transportiert, wo z.B. Blumenstecklinge in das Pflanzmedium eingepflanzt werden. Von hier aus werden die Behälterstapel zu einem Raum transportiert, wo die Behälter nebeneinander feldförmig abgesetzt werden. In diesem klimatisierten Raum, in dem die Stecklinge genügend Licht erhalten und sich ausgezeichnet besprühen lassen, herrschen im übrigen ausgezeichnete Bedingungen für das Wachstum und vor allem für die Wurzelbildung der Stecklinge.

Sobald die Stecklinge ausreichend Wurzeln gebildet haben, werden die Behälter wieder gestapelt, um zu den Abnehmern versandt zu werden, die die Stecklinge mit der Pflanzerde z.B. ins freie Feld umpflanzen und sie zu den für den Einzelverkauf geeigneten Blumen weiterkultivieren. Die leeren Behälter werden gestapelt und evtl. wiederum über eine Zwischenlagerung zur Füllstation zurückbefördert.

«Gerades Übereinanderstapeln» bedeutet hier, dass die langen und die kurzen Seiten der Behälter senkrechte Flächen bilden, so dass ein blockförmiger Stapel entsteht.

Zweck der Erfindung ist es, einen Behälter ohne den genannten Nachteil zur Verfügung zu stellen.

Nach der Erfindung wird dies dadurch erreicht, dass die Zweitabstandhalter durch vier schräg nach einer Schmalseite des Behälters gerichtete, nahe den Eckpunkten des Behälters angeordnete Eckpfosten gebildet werden, die in der ersten Gebrauchsstellung in durch Rippen gebildete Aussparungen in den Wandhohlräumen der langen Begrenzungswände eines darübergestapelten Behälters eingreifen und dass an der Unterseite der Begrenzungswände senkrecht unter den oberen Enden der Eckpfosten Höhlungen angeordnet sind, so dass in der zweiten Gebrauchsstellung die oberen Enden der Eckpfosten von den Höhlungen eines darauf gestapelten Behälters aufgenommen werden.

Um das Füllen des Behälters mit Pflanzmedium zu erleichtern, ist es vorteilhaft, eine kurze Begrenzungswand wegzulassen. Vorzugsweise wird die Begrenzungswand an derjenigen Schmalseite, die sich auf der Seite des spitzen Neigungswinkels der Eckpfosten befindet, weggelassen.

Zum Entleeren der Behälter wird, vor allem dann, wenn die Begrenzungswände höher als die Pflanzmediumfüllung sind, eine kurze Seitenwand mit Öffnungen versehen, durch die eine Ausstossvorrichtung gesteckt werden kann.

Die Erfindung wird im folgenden anhand eines in der Zeichnung wiedergegebenen Ausführungsbeispiels näher erläutert.

Die einzelnen Abbildungen stellen folgendes dar:

Fig. 1: eine Draufsicht auf eine Ausführungsform eines Behälters gemäss der Erfindung;

Fig. 2: eine Vorderansicht des Behälters nach Fig. 1;

Fig. 3: die rechte Seitenansicht des Behälters nach Fig. 1 in grösserem Massstab;

Fig. 4: einen Schnitt entlang der Linie IV-IV in Fig. 3;

Fig. 5: einen Schnitt entlang der Linie V-V in Fig. 2 in grösserem Massstab;

Fig. 6: einen Schnitt entlang der Linie VI-VI in Fig. 2 in grösserem Massstab;

Fig. 7: einen Schnitt entlang der Linie VII-VII in Fig. 2.

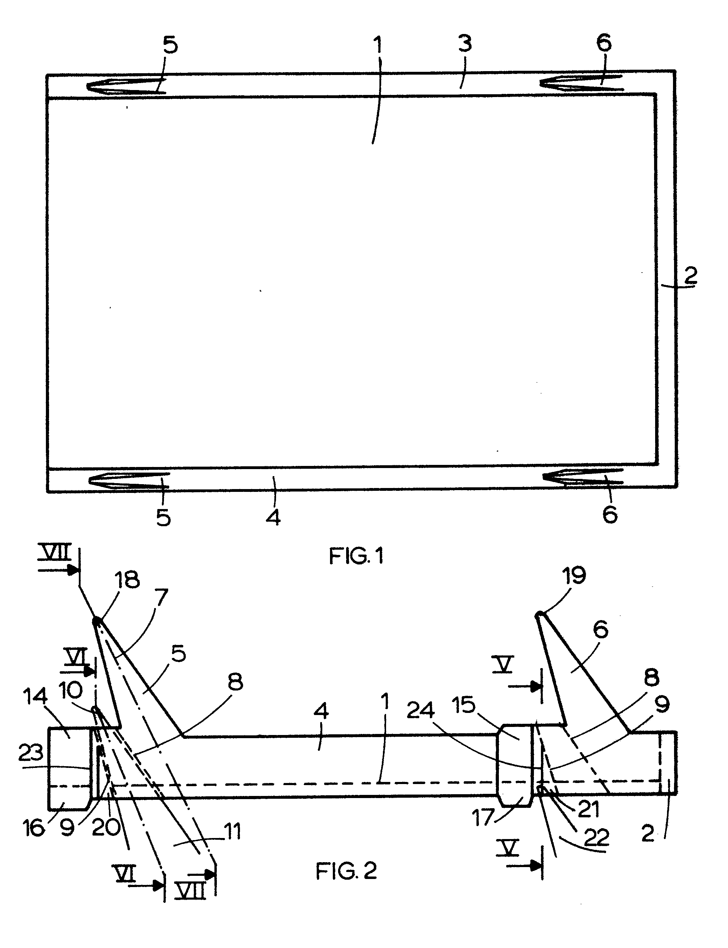

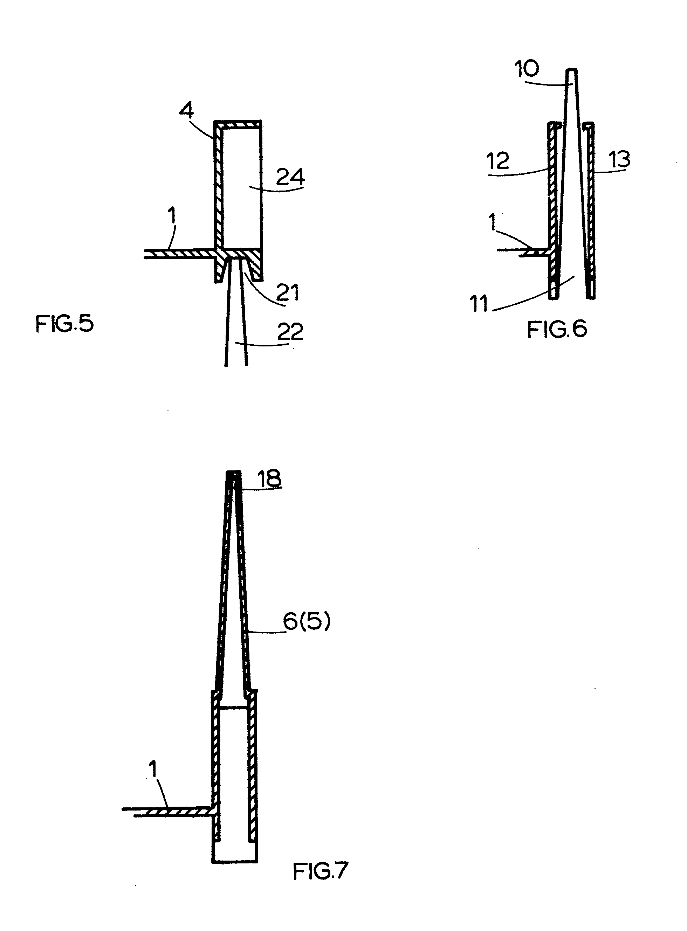

Der Behälter gemäss der Erfindung ist in Fig. 1 bis 7 wiedergegeben; hiervon zeigt Fig. 1 die Draufsicht. Der Behälter besitzt einen rechteckigen Boden 1, eine kurze Begrenzungswand 2 und zwei lange Begrenzungswände 3 und 4. Für bestimmte Verwendungszwecke, z.B. beim Gebrauch lockerer Pflanzerde, kann der Behälter auch mit zwei kurzen Seitenwänden versehen werden. Die Wände 3 und 4 sind im wesentlichen hohl ausgebildet. Zwei Paar als Zweitabstandhalter dienende Eckpfosten 5 und 6 befinden sich an den langen Seitenwänden, die alle in der gleichen Richtung unter dem gleichen Winkel angeordnet sind, wie in Fig. 2 dargestellt. Der Neigungswinkel der Mittellinien, wie dieser für einen Eckpfosten 5 mit 7 angegeben ist, beträgt 35°. Auf der linken Seite der Eckpfosten in Fig. 2 befinden sich im Wandhohlraum schräg angeordnete Rippen 8 und 9, die zusammen mit der Wand 4 bzw. 3 Aussparungen einschliessen, in die die Eckpfosten hineinpassen, wenn ein Behälter in erster Gebrauchsstellung auf einen darunter liegenden identischen Behälter gestapelt wird. Der obere Behälter wird hierbei schräg abwärts auf den darunter befindlichen Behälter aufgesetzt. Diese Richtung müsste für die Behälter – wie in Fig. 2 dargestellt – von links oben nach rechts unten verlaufen. Beim Ausrichten der Eckpfosten ist zu berücksichtigen, dass die Eckpfosten in durch Rippen (8, 9) gebildete Aussparungen in den Wandhohlräumen der langen Begrenzungswände (3, 4) eines darübergestapelten Behälters eingreifen, so dass die Behälter gerade übereinander zu liegen kommen. Obgleich der obere Teil 10 eines Eckpfostens 11 eines darunter befindlichen Behälters in Fig. 2 über die Wand 4 hinausragt, ist dies nicht erforderlich, wenn kürzere Eckpfosten gewählt werden. In diesem Falle kann die Wand an der Oberseite geschlossen sein. Das Aufnehmen eines Eckpfostens in die Wandhöhlung wird in Fig. 6 nochmals verdeutlicht, wo die Wandteile 12 und 13 gemeinsam die Wand 4 bilden.

Die Eckpfosten sind auf der Zeichnung hohl ausgebildet (siehe Fig. 7); es ist jedoch auch möglich, die sich an der Aussenseite des Behälters befindlichen Wandteile wegzulassen und die Eckpfosten durch Rippen zu verstärken.

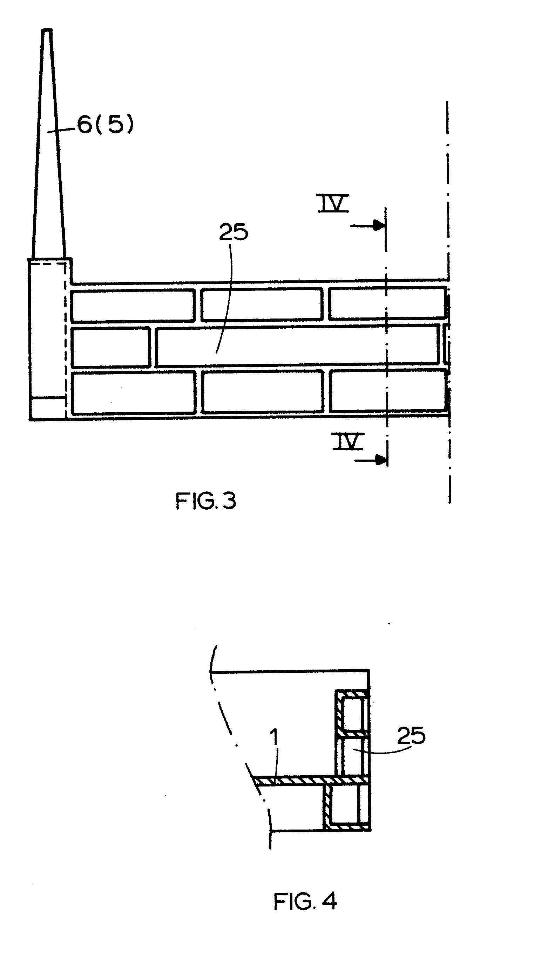

Beim Stapeln in der ersten Gebrauchsstellung verschieben sich die Eckpfosten so weit aneinander entlang, bis die Unterseiten der Begrenzungswände eines Behälters auf den Oberseiten der Begrenzungswände des darunter befindlichen Behälters ruhen, so dass die Begrenzungswände als Erstabstandhalter dienen, wobei die Eckpfosten (5, 6) in durch Rippen (8, 9) gebildete Aussparungen in den Wandhohlräumen der langen Begrenzungswände (3, 4) eines darübergestapelten Behälters eingreifen. Zu den Begrenzungswänden werden auch die nicht doppelt ausgebildeten Wandteile 14 und 15 gerechnet, die an der Unterseite mit den Füssen 16 bzw. 17 versehen sind. Senkrecht unter den oberen Enden 18 und 19 der Eckpfosten 5 bzw. 6 sind an der Unterseite der Begrenzungswände Höhlungen 20 bzw. 21 vorhanden, die die oberen Teile der Eckpfosten eines Behälters aufnehmen, wenn hierauf ein weiterer Behälter in zweiter Gebrauchsstellung gestapelt wird. Dies ist in Fig. 5 in vergrössertem Massstab wiedergegeben. An der Stelle, wo die oberen Teile der Eckpfosten 22 an der Oberseite der Höhlungen 20 bzw. 21 anliegen, befinden sich senkrechte Verstärkungsrippen 23 und 24 an der Seitenwand 4 bzw. 3. Die kurze Begrenzungswand 2, von der in Fig. 3 eine rechte Ansicht dargestellt ist, besitzt Öffnungen 25 und ist ausserdem durch waagerechte und senkrechte Rippen verstärkt. Die Öffnungen 25 können nicht nur als Handgriff dienen, sondern sind in erster Linie angebracht, um einen Schiebemechanismus durchzuführen, der den Behälter zur gegenüberliegenden Seite (ohne Begrenzungswand) hin entleert.

Der beschriebene Behälter besitzt den erheblichen Vorteil, dass sämtliche Behälter in beiden Gebrauchsstellungen von der gleichen Seite aus zugänglich sind. Sie lassen sich auf einfache Weise aus der ersten in die zweite Gebrauchsstellung bringen und umgekehrt, und zwar durch einfach auszuführende schräge und waagerechte Bewegungen des Behälters.

Der beschriebene Behälter gemäss der Erfindung kann in einem Stück aus Kunststoff spritzgegossen werden.

Die Aussenmasse der Behälter betragen vorzugsweise 600 mm bzw. 400 mm, da die derzeit benutzten Behälter diese Abmessungen besitzen.

Der beschriebene Behälter gemäss der Erfindung hat vorzugsweise durch Rippen verstärkte Bodenplatten.

**Patentansprüche**

1. Stapelbarer Behälter, der aus einem im wesentlichen rechteckigen Boden (1) mit hierauf angebrachten senkrechten Begrenzungswänden (2, 3, 4) sowie vier in der Nähe der Eckpunkte angeordneten Abstandhaltern (5, 6) besteht, die als Erst- bzw. Zweitabstandhalter für gerades Übereinanderstapeln von mehreren identischen Behältern in einer ersten bzw. zweiten Gebrauchsstellung mit geringem bzw. grossem Stapelabstand dienen, dadurch gekennzeichnet, dass die Zweitabstandhalter durch vier schräg nach einer Schmalseite des Behälters gerichtete, nahe den Eckpunkten des Behälters angeordnete Eckpfosten (5, 6) gebildet werden, die in der ersten Gebrauchsstellung in durch Rippen (8, 9) gebildete Aussparungen in den Wandhohlräumen der langen Begrenzungswände (3, 4) eines darübergestapelten Behälters eingreifen und dass an der Unterseite der Begrenzungswände senkrecht unter den oberen Enden der Eckpfosten Höhlungen (21) angeordnet sind, so dass in der zweiten Gebrauchsstellung die oberen Enden (10) der Eckpfosten von den Höhlungen eines darauf gestapelten Behälters aufgenommen werden.

2. Stapelbarer Behälter nach Anspruch 1, dadurch gekennzeichnet, dass keine Begrenzungswand an derjenigen Schmalseite vorhanden ist, die sich auf der Seite des spitzen Neigungswinkels der Eckpfosten befindet.

3. Stapelbarer Behälter nach Anspruch 1 oder 2, dadurch gekennzeichnet, dass der Behälter mit unter dem Boden hervorstehenden Füssen (16) ausgerüstet ist, die einen Teil der Begrenzungswände bilden.

4. Stapelbarer Behälter nach einem der Ansprüche 1 bis 3, dadurch gekennzeichnet, dass die Eckpfosten kegelig ausgebildet sind.

5. Stapelbarer Behälter nach einem der Ansprüche 1 bis 4, dadurch gekennzeichnet, dass die Eckpfosten hohl sind.

## Claims

1. Stackable container consisting of an essentially rectangular bottom (1) with vertical bounding walls (2, 3, 4) provided on it, and of four spacers (5, 6) arranged near the corner points, the walls serving as first spacing elements and the spacers as second spacing elements for stacking two or more identical containers in vertical alignment in a first and a second position of use, respectively, with small and large intervals in the stack, respectively, this container being characterized in that the second spacing elements are formed by four corner posts (5, 6) arranged near the corner points of the container and obliquely pointing towards one of the short sides of the container, which posts, in the first position of use, are received by spaces formed by ribs (8, 9) in the wall cavities of the long bounding walls (3, 4) of a superposed container, and in that at the bottom of the bounding walls, vertically under the top ends of the corner posts, holes (21) are provided so that, in the second position of use, the top ends (10) of the corner posts are received by the holes of a superposed container.

2. Stackable container according to claim 1, characterized in that there is no bounding wall on that short side of the container which ist located on the side of the acute inclination angle of the corner posts.

3. Stackable container according to claim 1 or 2, characterized in that the container is provided with feet projecting below the bottom (16) and forming part of the bounding walls.

4. Stackable container according to the claims 1 to 3, characterized in that the corner posts are conical in shape.

5. Stackable container according to any one of the claims 1 to 4, characterized in that the corner posts are hollow.

## Revendications

1. Récipient empilable, qui est composé d'un fond (1) sensiblement rectangulaire muni de parois limites verticales (2, 3, 4) qui s'élèvent sur ce fond, ainsi que de quatre entretoises disposées à proximité des angles, et qui servent de premières ou deuxièmes entretoises pour l'empilement droit de plusieurs récipients identiques respectivement dans une première position d'utilisation et dans une deuxième position d'utilisation qui comportent respectivement un faible écartement d'empilement et un grand écartement d'empilement, caractérisé en ce que les deuxièmes entretoises sont formées de quatre montants d'angle (5, 6) dirigés obliquement vers un petit côté du récipient, situés à proximité des angles du récipient, et qui, dans la première position d'utilisation, sont engagés dans des évidements formés par des nervures (8, 9) dans les cavités des parois limites longues (3, 4) d'un récipient empilé au-dessus, et en ce que, au niveau de la face inférieure des parois limites, des creux (21) sont ménagés à la verticale au-dessous des extrémités supérieures des montants d'angle, de sorte que, dans la deuxième position d'utilisation, les extrémités supérieures (10) des montants d'angle se logent dans les creux d'un récipient empilé au-dessus.

2. Récipient empilable selon la revendication 1, caractérisé en ce qu'il n'est pas prévue de paroi limite sur le côté étroit qui se trouve sur le côté de l'angle aigu de l'inclinaison des montants d'angle.

3. Récipient empilable selon l'une des revendications 1 et 2, caractérisé en ce que le récipient est équipé de pieds (16) qui font saillies sous son fond et qui forment une partie des parois limites.

4. Récipient empilable selon l'une quelconque des revendications 1 à 3 caractérisé en ce que les montants d'angle sont de configuration conique.

5. Récipient empilable selon l'une des revendications 1 à 4, caractérisé en ce que les montants d'angle sont creux.

FIG. 1

FIG. 2

FIG. 3

FIG. 4

FIG.5

FIG.6

FIG.7